**Europäisches Patentamt**

**European Patent Office**

**Office européen des brevets**

(19)

(11) Veröffentlichungsnummer: **0 126 861**
**A1**

(12)

# EUROPÄISCHE PATENTANMELDUNG

(21) Anmeldenummer: **84102193.4**

(22) Anmeldetag: **01.03.84**

(51) Int. Cl.³: **A 01 J 25/13**

(30) Priorität: **27.05.83 DE 3319325**

(43) Veröffentlichungstag der Anmeldung:
**05.12.84 Patentblatt 84/49**

(84) Benannte Vertragsstaaten:
**CH FR GB IT LI NL**

(71) Anmelder: **Royal-Käseformen und -Pressen AG
Rothausweg 14F
CH-6300 Zug(CH)**

(72) Erfinder: **de Jonge, Heinrich
Rothausweg 14F
CH-6300 ZUG(CH)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath
Maximilianstrasse 58
D-8000 München 22(DE)**

(54) Vorrichtung zur Herstellung von Käse.

(57) Vorrichtung zur Herstellung von Käse mit einem oben offenen Behälter (10) für die Aufnahme von Käsebruch oder dergleichen und mit einem in den Behälter (10) eingesetzten und in diesem zu seinem Boden (22) hin verschiebbaren Deckel (18), wobei die Behälterwandung (12), der Boden (22) und der Deckel (18) Flüssigkeits-Durchtrittsöffnungen (24) aufweisen und wobei zum sicheren Austreiben des gepreßten Käses vorgesehen ist, daß der Boden (22) zum Deckel (18) hin verschiebbar geführt ist.

Fig. 1

Croydon Printing Company Ltd.

EP 0 126 861 A1

## B e s c h r e i b u n g

Die Erfindung betrifft eine Vorrichtung zur Herstellung von Käse mit einem oben offenen Behälter für die Aufnahme von Käsebruch oder dergleichen und mit einem in den Behälter eingesetzten und in diesem zu seinem Boden hin verschiebbaren Deckel, wobei die Behälterwandung, der Boden und der Deckel Flüssigkeits-Durchtrittsöffnungen aufweisen.

Ein Behälter der eingangs beschriebenen Art ist in der DE-OS 24 49 916 erläutert und dient dort zum Herstellen von Weichkäse, wobei die Molke durch die Flüssigkeits-Durchtrittsöffnungen abfließen kann.

Wenn jedoch mit einer derartigen Käseform Hartkäse hergestellt werden soll, wobei mittels des eingangs erwähnten Deckels ein Druck auf den Käsebruch ausgeübt wird, ergeben sich häufig Schwierigkeiten, wenn nach dem Stülpen der Form der Käse aus der Form genommen werden soll. Selbst bei konischen Behältern haftet der Käse häufig so fest an der die Durchtrittsöffnungen aufweisenden Wandung, daß er sich nach dem Stürzen der Käseform nicht löst. Zwar sind zum Austreiben des Käses aus der Form Drucklufteinrichtungen bekannt, diese können jedoch bei der gattungsgemäßen Vorrichtung nicht eingesetzt werden, weil die Druckluft durch die Flüssigkeits-Durchtrittsöffnungen entweichen würden, ohne einen Druck zum Austreiben des Käses auszuüben.

Der Erfindung liegt die Aufgabe zugrunde, die gattungsgemäße Vorrichtung so zu verbessern, daß der Käse nach dem Stürzen des Behälters sicher aus diesem ausgetrieben wird.

2 **0126861**

Erfindungsgemäß wird diese Aufgabe dadurch gelöst, daß die Vorrichtung im Bereich des Bodens Führungen zum Verschieben des Bodens zum Deckel hin aufweist.

Mit dieser Lösung wird erreicht, daß nach dem Stürzen des Behälters der gepreßte Käse mittels des zur Deckelöffnung des Behälters hin verschiebbaren Bodens leicht aus dem Behälter gedrückt werden kann, wobei in den meisten Fällen ein kurzer Verschiebeweg des Bodens ausreicht, um den Haftwiderstand des Käses an der Behälterwandung zu überwinden.

In Weiterbildung der Erfindung ist vorgesehen, daß die Führungen teleskopisch ineinander verschiebbare Ringe sind, die nicht über die Behälterunterseite hinausstehen. Die Teleskop-Ringe sorgen für eine klemmungsfreie Führung des Bodens, der sich dadurch nicht schrägstellen kann. Da ferner die Ringe nicht über die Behälterunterseite hinausstehen, ist ein sicherer Stand der Vorrichtung beim Pressen des Käses gewährleistet.

Nach einem weiteren Merkmal der Erfindung weist die Unterseite des Bodens eine Angriffsfläche für den Ansatz eines Verschiebeorgans auf, so daß die Vorrichtung in vollautomatisch betriebenen Anlagen zur Käseherstellung eingesetzt werden kann.

Weitere Merkmale und Vorteile der Erfindung ergeben sich aus den übrigen Unteransprüchen und aus der nachfolgenden Beschreibung eines Ausführungsbeispiels, das in der Zeichnung dargestellt ist.

Es zeigen:

Figur 1   einen Längsschnitt durch eine Hälfte einer
erfindungsgemäß ausgebildeten Vorrichtung
kurz vor dem Preßbeginn,

Figur 2   die andere Hälfte der in Figur 1 gezeigten
Vorrichtung nach dem Auspressen des Käses
durch den verschiebbaren Boden und

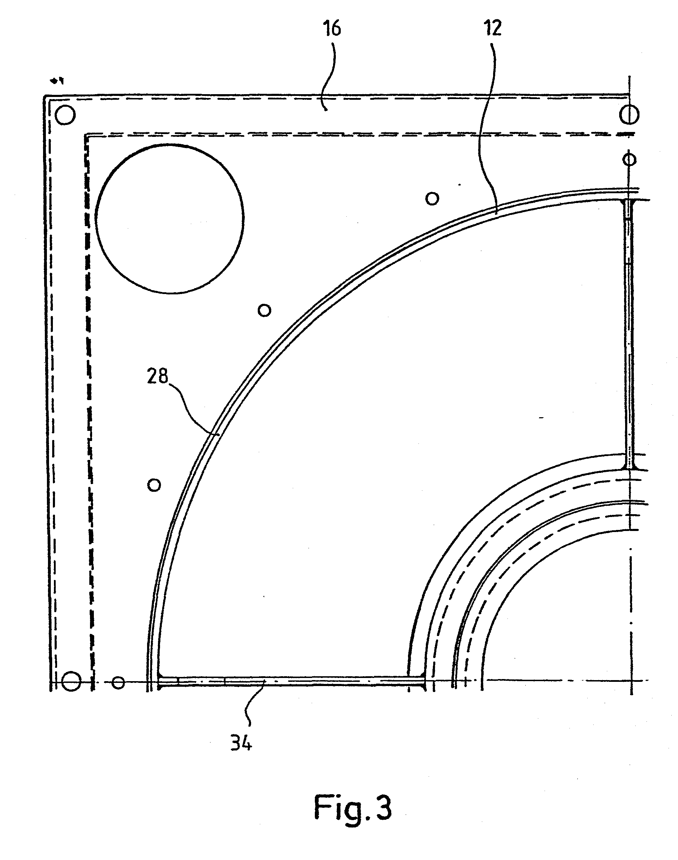

Figur 3   im Ausschnitt eine Unteransicht der in den

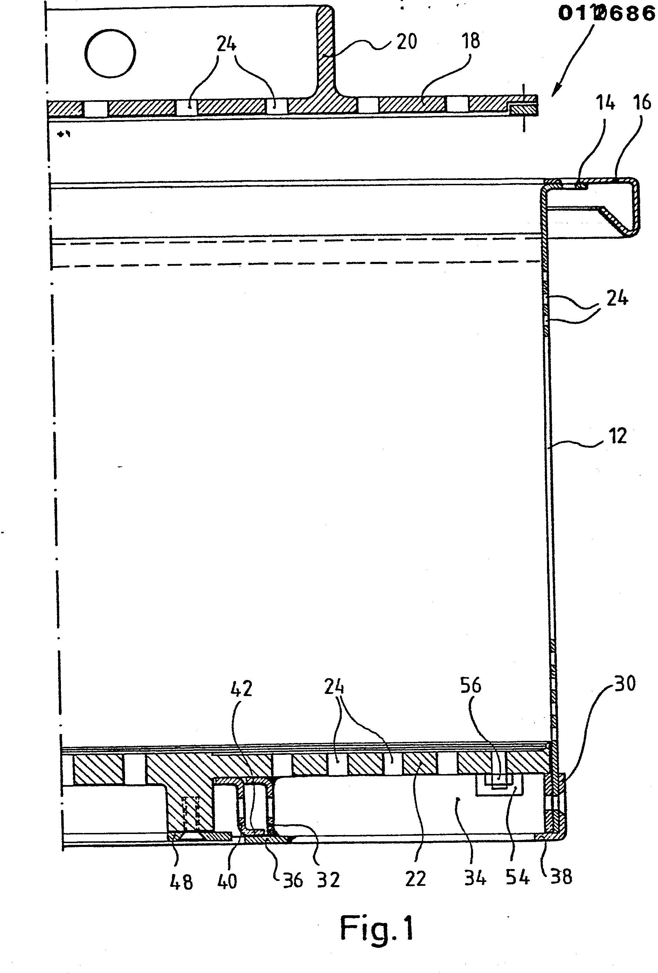

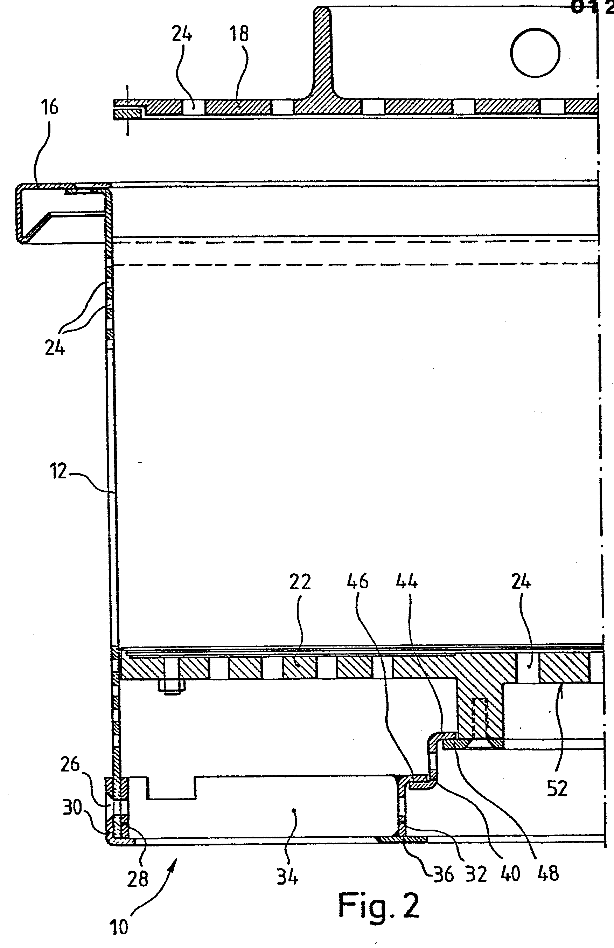

Figuren 1 und 2 gezeigten Vorrichtung.

Bei dem in der Zeichnung dargestellten Ausführungsbeispiel hat die Vorrichtung zur Herstellung von Käse einen
Behälter 10 mit einer zylindrischen Behälterwandung 12.
Der obere Rand der Behälterwandung 12 ist als Flansch
14 ausgebildet, welcher an einem quadratischen Rahmen
16 befestigt ist. Der Rahmen 16 kann in bekannter Weise
in eine Aufnahmeeinrichtung einer automatisch arbeitenden Anlage eingesetzt werden.

Zum Pressen des in den Behälter 10 eingefüllten Käsebruchs dient ein Deckel 18, der in den Behälter 10 eingesetzt und in diesem nach unten verschoben werden kann.
Für den Angriff entsprechender Verschiebemittel weist
der runde Deckel 18 einen nach oben abstehenden Ringrand 20 auf. Die Unterseite des Behälters 10 ist durch
einen Boden 22 abgeschlossen, der zum Deckel 18 hin
achsparallel verschoben werden kann. Sowohl der Boden
22 als auch der Deckel 18 und die Behälterwandung 12
haben Flüssigkeits-Durchtrittsöffnungen 24, durch die
die Molke abfließen kann.

Am unteren Rand der Behälterwandung 12 ist durch Nieten
26 ein Verstärkungsring 28 befestigt, der an der Innenseite der Behälterwandung 12 anliegt. Mittels der Niete 26 ist ferner an der Außenseite ein im Querschnitt L-förmiger Ring 30 befestigt. Konzentrisch in dem Verstärkungsring 28 befindet sich ein Haltering 32, der mit dem Verstärkungsring 28 durch angeschweißte Radialstege 34 verbunden ist. An der Unterseite des Halteringes 32 ist ein Bodenring 36 angeschweißt, der in derselben Ebene liegt wie der horizontale Schenkel 38 des L-förmigen Ringes 30.

In den Haltering 32 ist teleskopisch verschiebbar ein weiterer Ring 40 konzentrisch eingesetzt. Das untere Ende dieses Ringes 40 geht in einen horizontal nach außen gerichteten Flansch über, der einen Endanschlag 42 bildet, während das obere Ende des Ringes 40 in einen horizontal nach innen gerichteten Flansch übergeht, der einen weiteren Endanschlag 44 darstellt. Der untere Endanschlag 42 wird von einem weiteren Endanschlag 46 übergriffen, der sich vom oberen Rand des Halteringes 32 radial nach innen erstreckt.

Der obere Endanschlag 44 des Ringes 40 übergreift den äußeren Rand einer Scheibe 48, die an einem Ringwulst 50 befestigt ist, der zentrisch von der Unterseite des Bodens 22 absteht. Der äußere Rand der Scheibe 48 bildet somit einen Endanschlag für den Boden 22, der mit dem oberen Endanschlag 44 des Ringes 40 zusammenwirkt.

An der Unterseite des Bodens 22 befindet sich in dessen Zentrum innerhalb des Ringwulstes 50 eine Angriffsfläche 52 für den Ansatz eines nicht gezeigten Verschiebeorgans, das durch die Scheibe 48 hindurch auf den Boden 22 einwirken kann.

In der in Figur 1 gezeigten Befüllungs- und Preßstellung liegt der Boden 22 auf den Radialstegen 34 auf, ohne daß irgendwelche Teile oder Führungen über die Unterseite des Bodenringes 36 hervorstehen. In die Radialstege 34 sind Aussparungen 54 eingearbeitet, in welche Verschraubungen 56 hineinragen können, mit deren Hilfe am Boden 22 nicht näher gezeigte Elemente, beispielsweise eine Lochplatte, befestigt ist.

Wenn nach dem Pressen der Deckel 18 abgenommen und der Behälter 10 gestürzt ist, drückt das erwähnte Verschiebeorgan gegen die Angriffsfläche 52 des Bodens 22 und verschiebt diesen unter der Führung der teleskopisch ineinander verschiebbaren Ringe bis in die in Figur 2 gezeigte Stellung, in der die Endanschläge 42, 46 und 44, 48 gegenseitig zur Anlage kommen. In dieser Stellung hat sich die Rinde des Käses von der Innenseite der Behälterwandung 12 ohne Zerstörung ihrer Oberfläche gelöst, so daß der Käse aufgrund seines Eigengewichtes aus dem Behälter 10 herausfällt.

Im allgemeinen genügt ein geringer Verschiebehub des Bodens 22 in der Größenordnung von drei bis vier Zentimeter. Je nach der Größe des Behälters 10 und damit der herzustellenden Käselaibe können für die Führung des Bodens 22 anstatt nur eines Ringes 40 mehrere derartiger, teleskopisch ineinander verschiebbarer Ringe vorgesehen werden.

PATENTANWÄLTE 0126861
EUROPEAN PATENT ATTORNEYS

A GRUNECKER DR ER
DR H KINKELDEY DR ING
DR W STOCKMAIR DR ING AEE CALTECH
DR K SCHUMANN DR RER NAT
P H JAKOB DR ING
DR G BEZOLD DR RER NAT
W MEISTER DR ING
H HILGERS DR ING
DR H MEYER-PLATH DR ING

8000 MÜNCHEN 22
MAXIMILIANSTRASSE 58

1

Royal-Käseformen und -Pressen AG
Rothausweg 14F
CH-6300 Zug / Schweiz

---

Vorrichtung zur Herstellung von Käse

---

P a t e n t a n s p r ü c h e

1. Vorrichtung zur Herstellung von Käse mit einem oben offenen Behälter für die Aufnahme von Käsebruch oder dergleichen und mit einem in den Behälter eingesetzten und in diesem zu seinem Boden hin verschiebbaren Deckel, wobei die Behälterwandung, der Boden und der Deckel Flüssigkeits-Durchtrittsöffnungen auf-

weisen, dadurch g e k e n n z e i c h n e t , daß
.die Vorrichtung im Bereich des Bodens (22) Führungen
zum Verschieben des Bodens (22) zum Deckel (18) hin
aufweist.

2. Vorrichtung nach Anspruch 1, dadurch g e k e n n -
z e i c h n e t , daß die Führungen teleskopisch ineinander verschiebbare Ringe (32, 40, 48) sind, die
nicht über die Behälterunterseite hinausstehen.

3. Vorrichtung nach Anspruch 2, dadurch g e -
k e n n z e i c h n e t , daß im unteren Ende des
Behälters (10) ein Haltering (32) befestigt ist, in
dem wenigstens ein im Durchmesser kleinerer Ring (40)
teleskopisch verschiebbar ist, wobei der kleinste Ring
einen Endanschlag (48) des Bodens (22) radial übergreift.

4. Vorrichtung nach Anspruch 3, dadurch g e k e n n -
z e i c h n e t , daß alle Ringe (32, 40) zur Begrenzung ihrer relativen Verschiebbarkeit Endanschläge (42,
44, 46, 48) aufweisen.

5. Vorrichtung nach Anspruch 3 oder 4, dadurch g e -
k e n n z e i c h n e t , daß der Haltering (32) über
Radialstege (34) im unteren Ende des Behälters (10) befestigt ist.

6. Vorrichtung nach einem der Ansprüche 2 bis 5, dadurch g e k e n n z e i c h n e t , daß die Ringe
(32, 40) zentrisch zum Behälter (10) angeordnet sind.

7. Vorrichtung nach einem der vorhergehenden Ansprüche,
dadurch g e k e n n z e i c h n e t , daß die Unterseite des Bodens (22) eine Angriffsfläche (52) für den
Ansatz eines Verschiebeorgans aufweist.

Fig.1

Fig. 2

0126861

Fig.3

0126861

Nummer der Anmeldung

EUROPÄISCHER RECHERCHENBERICHT

EP 84 10 2193

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 407 583 (B.T. GEESSINK) * Seite 5, Absatz 5 - Seite 6, Absatz 1 * | 1 | A 01 J 25/13 |
| A | FR-A-2 178 788 (TISSMETAL LIONEL DUPONT) | | |
| A | DE-B-1 101 852 ( PERFORA V/H. ROSSEN & CO.) | | |
| D,A | DE-A-2 449 916 (ALPMA ALPENLAND-MASCHINENBAU HAIN & CO. KG) | | |

RECHERCHIERTE
SACHGEBIETE (Int. Cl. ³)

A 01 J

Der vorliegende Recherchenbericht wurde für alle Patentansprüche erstellt.

| Recherchenort DEN HAAG | Abschlußdatum der Recherche 01-08-1984 | Prüfer NEHRDICH H.J |
|---|---|---|